Europäisches Patentamt

European Patent Office

Office européen des brevets

(19)

(11) **EP 0 622 570 B1**

(12) **EUROPÄISCHE PATENTSCHRIFT**

(45) Veröffentlichungstag und Bekanntmachung des Hinweises auf die Patenterteilung:
**12.02.1997 Patentblatt 1997/07**

(51) Int Cl.$^6$: **F16H 61/02**

(21) Anmeldenummer: **93106831.6**

(22) Anmeldetag: **27.04.1993**

(54) **Steuerung für ein automatisches Kraftfahrzeug-Getriebe**

Control system for vehicle automatic transmission

Système de commande de transmission automatique de véhicule

(84) Benannte Vertragsstaaten:
**DE FR GB IT**

(43) Veröffentlichungstag der Anmeldung:
**02.11.1994 Patentblatt 1994/44**

(73) Patentinhaber: **SIEMENS AKTIENGESELLSCHAFT**
**80333 München (DE)**

(72) Erfinder: **Graf, Friedrich, Dipl.-Ing. (FH)**
**W-8400 Regensburg (DE)**

(56) Entgegenhaltungen:
**EP-A- 304 089         EP-A- 0 391 387**
**EP-A- 0 433 603       EP-A- 0 503 948**
**US-A- 4 692 866**

- **PATENT ABSTRACTS OF JAPAN vol. 15, no. 321 (M-1147)15. August 1991 & JP-A-3 121 354 ( TOYOTA ) 23. Mai 1991**

**Beschreibung**

Die Erfindung betrifft eine Steuerung für ein automatisches Kraftfahrzeuggetriebe nach dem Oberbegriff von Anspruch 1.

Bei bekannten derartigen Getriebesteuerungen für Kraftfahrzeuge wird die Übersetzung des Getriebes in Abhängigkeit von der Fahrpedalstellung und von der Fahrgeschwindigkeit anhand von abgespeicherten Kennfeldern automatisch eingestellt. Dabei werden außerdem der Lastzustand des Kraftfahrzeugs und der Fahrstil des Fahrers berücksichtigt (EP-A 0 471 102, DE-C 33 41 652).

Bei anderen bekannten automatischen Getriebesteuerungen (US-A 4 841 815, EP-A 0 375 155, A. Takahashi, Method of Predicting Driving Environment, IFSA 1991, Brüssel, S. 203 bis 206) erfolgt die Auswahl des jeweils zu schaltenden Ganges durch Steuereinrichtungen, die nach den Methoden der Fuzzy-Logik arbeiten. Mit dieser Logik wird Expertenwissen, das durch Erfahrung gewonnen worden ist, in Form einer sogenannten Regelbasis beschrieben und damit für die Regel- oder Steuervorgänge des Kraftfahrzeuggetriebes verwendet. Bei einer weiteren und gattungsgemäßen Getriebesteuerung wird für jeden Fahrparameter eine Zugehörigkeitsfunktion erstellt und durch Ausführen eine Fuzzy-Inferenz anhand vorgegebener Regeln ein Schaltkennfeld ausgewählt (JP-A 03 121354).

Sämtliche Größen, die die Übersetzung bei einem fortschrittlichen automatischen Getriebe beeinflussen und die für ein solches Getriebe zu beachtenden fahrzeugspezifischen Anforderungen allein mit den Regeln der Fuzzy-Logik zu berücksichtigen ist allerdings sehr aufwendig und unzweckmäßig.

Der Erfindung liegt die Aufgabe zugrunde, eine Getriebe-steuerung zu schaffen, die die verschiedenen Einflußgrößen, insbesondere die Fahrdynamik, auf die einzustellende Getriebeübersetzung ohne großen Aufwand berücksichtigt, und die überschaubar und in hohem Maße betriebssicher ist. Dadurch wird die Anpassung an unterschiedliche Fahrzeugtypen wesentliche erleichtert.

Diese Aufgabe wird durch eine Steuerung nach Patentanspruch 1 gelöst.

Die Vorteile der Erfindung liegen insbesondere darin, daß sich mit der Fuzzy-Logik in einfacher Weise viele Einflußgrößen berücksichtigen lassen, daß aber durch den Einsatz von Schaltkennfeldern immer gewährleistet ist, daß das Schaltverhalten in erprobter Weise durch die Schaltkennfelder festgelegt ist. Außerdem können die Schaltkennfelder vorausberechnet werden.

Vorteilhafte Weiterbildungen der Erfindung sind in den Unteransprüchen niedergelegt.

Ausführungsbeispiele der Erfindung werden im folgenden anhand der Zeichnungen erläutert. Es zeigen:

Figur 1     die wesentlichen Bestandteile eines Kraftfahrzeugs mit einer erfindungsgemäßen Getriebesteuerung, in schematischer Darstellung,

Figur 2     die Getriebesteuerung des Kraftfahrzeugs nach Figur 1 als Blockdiagramm,

Figur 3     ein Beispiel eines Schaltkennfeldes der Getriebe-steuerung nach Figur 2,

Figur 4     eine in der Getriebesteuerung nach Figur 2 für die Schaltkennfeld-Auswahl verwendete Matrix,

Figur 5     ein Ablaufdiagramm für die Schaltkennfeld-Auswahl,

Figur 6     eine Tabelle, die Bedingungen für die Zulassung von Schaltungen durch Wechsel des Schaltkennfeldes enthält, und

Figur 7     eine Tabelle die Schaltungsunterdrückungen aufgrund von Schaltverboten der Fuzzy-Logik enthält.

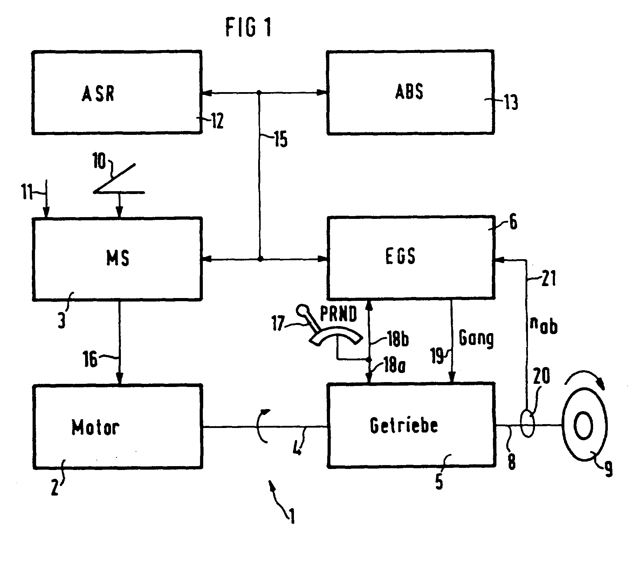

Ein schematisch dargestelltes Kraftfahrzeug 1 (Figur 1) weist einen Motor 2 auf, der von einer Motorsteuerung 3 gesteuert wird. Eine Motorabtriebswelle 4 ist über einen - hier nicht getrennt dargestellten - Drehmomentwandler mit einem automatischen Getriebe 5 verbunden, das von einer erfindungsgemäßen elektronischen Steuerung 6 gesteuert wird. Im nachfolgenden Ausführungsbeispiel ist das Getriebe 5 als Stufengetriebe ausgeführt, eine erfindungsgemäße Steuerung 6, läßt sich aber genauso gut für ein stufenloses Getriebe verwenden. Eine Getriebeabtriebswelle 8 ist mit der angetriebenen Achse des Kraftfahrzeugs verbunden, die hier durch ein angetriebenes Rad 9 symbolisiert wird.

Über ein Fahrpedal 10 gibt der Fahrer des Kraftfahrzeugs seine Befehle - genaugenommen sind es seine Wünsche - an die Motorsteuerung 3. Bei Betätigung des - hier nicht dargestellten - Bremspedals des Kraftfahrzeugs gelangt ein, z.B. von dem Bremslichtschalter erzeugtes, Bremssignal über eine Leitung 11 zu der Motorsteuerung 3. Das Kraftfahrzeug ist außerdem mit einer Radschlupf- oder Antischlupfregelung (ASR) 12 und einem Antiblockiersystem (ABS) 13 versehen, die durch Signalleitungen 15 untereinander sowie mit der Motorsteuerung 3 und der Getriebesteuerung 6 zwecks Austausch von Signalen verbunden sind. Über eine Signalleitung 16 sendet die Motorsteuerung 3 an den Motor 2 Signale, mit denen die Zündung, die Einspritzung und die Drosselklappe gesteuert werden, (letztere nur, wenn eine entsprechende Steuereinrichtung vorhanden ist).

Über einen Wählhebel 17 bestimmt der Fahrer in üblicher Weise den Fahrbereich des automatischen Getriebes 5. Die Wählhebelsignale gelangen über eine mechanische Verbindung 18a zu dem Getriebe 5 und über eine elektrische Signalleitung 18b zu der Steuerung 6. Die Steuerung 6 sendet über eine Signalleitung 19 Steuersignale an das Getriebe 5, die den jeweiligen Getriebegang festlegen und die erforderlichen Schaltvorgänge steuern, oder - bei einem stufenlosen Getriebe - die jeweilige Übersetzung einstellen. Die Drehzahl der Getriebeabtriebswelle 8 wird von einem Drehzahlsensor 20 über eine Signalleitung 21 an die Steuerung 6 gemeldet. Zumindest die Signalleitungen 15, die die Steuergeräte 3, 6, 12 und 13 miteinander verbinden, können aus einzelnen Signalleitungen oder aus einem bidirektionalen Bus, z.B. aus einem bekannten CAN- oder LAN-Bus, bestehen. Die Steuergeräte und -systeme 3, 12 und 13 müssen nicht vorhanden sein. Falls sie es aber sind, ist es von Vorteil, wenn die Getriebesteuerung 6 auf die von ihnen gelieferten Sensorsignale (z. B. für die Raddrehzahlen) und davon abgeleitete Größen zugreifen kann.

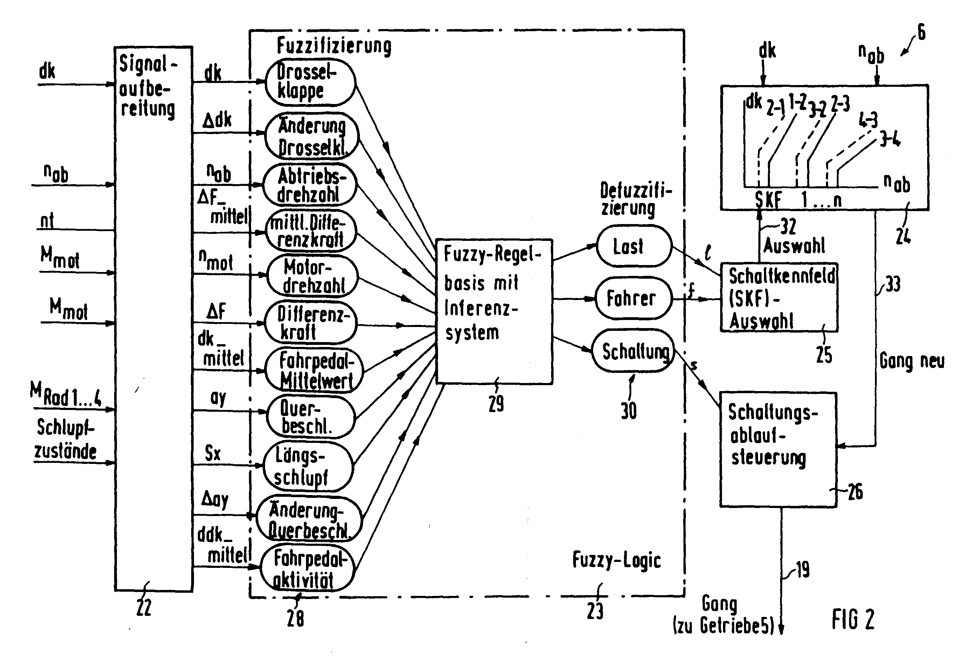

Die elektronische Steuerung 6 (Figur 2) weist folgende Bestandteile auf: eine Signalaufbereitungsschaltung (im folgenden abgekürzt: Signalaufbereitung) 22, eine Fuzzy-Logik-Steuerschaltung (im folgenden: Fuzzy-Logik) 23, einen Kennfeldspeicher 24 mit mehreren Schaltkennfeldern oder Getriebeübersetzungs-Tabellen, eine Schaltkennfeld-Auswahlschaltung (kurz: SKF-Auswahl) 25 und eine Schaltungsablaufsteuerung 26.

In der Signalaufbereitung 22 werden mehrere Eingangssignale aufbereitet, die von verschiedenen Sensoren oder von den erwähnten weiteren Steuergeräten geliefert werden. Die Eingangssignale werden dabei in von der Fuzzy-Logik 23 verarbeitbare charakteristische Größen gewandelt. Auf den in Figur 2 angedeuteten Eingangsleitungen gelangen (von oben nach unten) folgende Meßwerte oder Parameter zu der Signalaufbereitung 22: der sich in der Stellung der Drosselklappe oder allgemein des Fahrpedals niederschlagende Fahrerwunsch dK; die Getriebe-Abtriebsdrehzahl $n_{ab}$, die Turbinendrehzahl $n_t$ des Drehmomentwandlers; das Motordrehmoment $M_{mot}$; die Motordrehzahl $n_{mot}$; die Raddrehzahlen $n_{Rad1...4}$; und Schlupfzustands-Signale ("Schlupfzustände"). Diese Schlupfzustände können - alternativ zu einer Ermittlung aus den Raddrehzahlen - auch von der Radschlupfregelung 12 oder von dem Antiblockiersystem 13 geliefert werden. Die Steuerung 6 verfügt somit auch über Betriebsparameter oder Sensorsignale anderer Steuergeräte, falls solche vorhanden sind.

Fuzzy-Steuerungen als solche sind in der Literatur beschrieben (D. Abel: Fuzzy control - eine Einführung ins Unscharfe, AT 39 (1991) Heft 12). Durch die Fuzzifizierung werden die exakt bestimmten (engl. crisp) Größen der Eingangsparameter in linguistische Variablen abgebildet. Nachfolgend werden in dem Inferenzsystem die in Form einer sog. Regelbasis abgelegten linguistischen Regeln abgearbeitet und es wird eine unscharf formulierte Stellgröße bestimmt. In diesen Regeln (siehe Beispiel weiter hinten) ist das gewünschte Systemverhalten festgelegt. Die durch Inferenz bestimmte Stellgröße wird durch die Defuzzifizierung in eine physikalische Stellgröße - allgemein: "scharfe" Information - umgesetzt, die dann den zu steuernden Prozeß direkt beeinflußt. Die in der Signalaufbereitung 22 (Figur 2) in logische Größen umgewandelten Meßwerte und abgeleiteten Größen gelangen über aus der Zeichnung ersichtliche Leitungen zu dem Fuzzifizierer 28 des Reglers 23 und werden dort in linguistische Variablen umgesetzt und an das die Fuzzy-Regelbasis enthaltende Inferenzsystem 29 übermittelt. Mit den in der Regelbasis definierten Regeln wird der Lastzustand des Kraftfahrzeugs berechnet, eine Fahrererkennung durchgeführt, d.h. bestimmt, ob das Fahrverhalten des Fahrers sportlich oder verbrauchsorientiert ist, und schließlich festgelegt, ob eine Hoch- der eine Rückschaltung erlaubt oder verboten ist. Die Fuzzy-Logik fungiert sozusagen als Experte zum Ermitteln solcher entscheidender Parameter.

Das Inferenzsystem 29 erzeugt entsprechend drei Signale 1, f und s - nachfolgend als "last", "fahrer" und "schaltung" bezeichnet -, die in dem Defuzzifizierer in physikalische Stellgrößen umgewandelt werden und als Ausgangssignale der Fuzzy-Logik 23 das Schalten des automatischen Getriebes steuern. Das "last"- und das "fahrer"- Signal werden in der Schaltkennfeld-Auswahl miteinander verknüpft und ergeben ein Auswahlsignal, das über eine Signalleitung 32 zu dem Kennfeldspeicher 24 gelangt und dort das in dem jeweiligen Fall günstigste Schaltkennfeld auswählt. Eingangssignale des Kennfeldspeichers 24 sind der Fahrerwunsch (Drosselklappenstellung dK) und die Getriebeabtriebsdrehzahl $n_{ab}$. Überschreitet der durch diese Signale festgelegte Betriebszustand des Kraftfahrzeugs eine Kennlinie, so wird ein Signal erzeugt, das den neuen Gang festlegt und über eine Signalleitung 33 an die Schaltungsablaufsteuerung 26 übermittelt wird. Falls das Signal dort nicht in den noch zu erläuternden Fällen durch das Signal "schaltung" gesperrt wird, wird es über die Signalleitung 20 an das Getriebe 5 weitergeleitet und bewirkt dort das Schalten in den neuen Gang.

Das Signal "last" ist ein Maß für extern bedingte Lastzustände in Form einer erhöhten Fahrzeugbeladung und/oder des Befahrens einer Steigung oder eines Gefälles, und aus ihm resultiert das Erfordernis, das Schaltverhalten oder die Übersetzung des Getriebes an den neuen Lastzustand anzupassen. Das Signal "fahrer" beschreibt die Fahrweise des Fahrers, die indirekt aber auch durch extern bedingte Umstände wie Typ der Fahrstrecke (Stadt, Landstraße, Autobahn) beeinflußt sein kann. Beide Signale bewirken die Auswahl jeweils geeigneter Schaltkennfelder "SKF1 bis SKFn" in dem Kennfeldspeicher 24. Dazu existieren unterschiedliche Möglichkeiten. Im Ausführungsbeispiel werden beim Über- oder Unterschreiten scharfer Grenzen für die Signale geeignete Schaltkennfelder selektiert. Dabei hat die Anpassung an die externen Lastzustände Vorrang vor der Anpassung an den Fahrstil. Eine andere Möglichkeit besteht darin, Schaltkennlinien aus einzelnen Schaltkennfeldern ganz oder teilweise zu verschieben.

Das auch anhand eines Schaltkennfelds gewonnene Signal "Gang neu" wird der Schaltungsablaufsteuerung zugeführt. In dieser kann der Fuzzy-Logik-Regler mit dem Signal "schaltung" aktiv eingreifen und bestimmte Schaltungsarten unterdrücken (eine Hochoder Rückschaltung) oder jede Schaltung verhindern.

Mit dem Signal "schaltung" werden Schaltvorgänge, die sich aus den Schaltkennfeldern ergeben, dynamisch korrigiert. Ein Beispiel ist die schnelle Kurvenfahrt. Bei einem ausschließlichen Festlegen des Schaltverhaltens durch Kennfelder wird häufig beim Kurveneinlauf, wenn der Fahrer vom Gas geht, hochgeschaltet und beim Kurvenauslauf, wenn der Fahrer wieder Gas gibt, zurückgeschaltet. Diese die Fahrstabilität und den Fahrkomfort beeinträchtigenden und den Verschleiß fördernden Schaltvorgänge werden hier aber verhindert. Ein anderes Beispiel sind Schlupfzustände zwischen den Rädern des Kraftfahrzeugs und der Fahrbahn: die Fuzzy-Logik 23 vermeidet oder verzögert in der Schaltungsablaufsteuerung 26 Schaltungen, die die Fahrstabilität zusätzlich negativ beeinträchtigen könnten. Darüber hinaus bewirkt die Schaltungsablaufsteuerung 26, wenn sie eine Schaltung zuläßt, ein derartiges Ansteuern der elektro-hydraulischen Aktuatoren in dem Getriebe 5, daß die Gangwechsel schonend und komfortabel erfolgen.

Die verbesserte Fahrstabilität und der erhöhte Fahrkomfort werden durch das in der Fuzzy-Regelbasis enthaltene Expertenwissen erreicht, die Überschaubarkeit und Anpassungsfähigkeit der Getriebesteuerung wird durch die Verwendung von Schaltkennfeldern gewährleistet. Bei der Erstellung der Schaltkennfelder sind viele Informationen eingearbeitet worden, z.B. die Momentenreserve im neuen Gang, der Kraftstoffverbrauch usw.), die damit der Getriebesteuerung unmittelbar zur Verfügung stehen. Diese wird dadurch von der sehr aufwendigen Berechnung dieser Informationen entlastet. Unzulässig hohe oder niedrige Motordrehzahlen werden sicher verhindert. Die Fuzzy-Logik 23 wird mit Hilfe eines im Handel erhältlichen sog. CAE-Tools als Programm in der höheren Programmiersprache C oder direkt als Objektcode erstellt. Neben dieser Ausführung als auf einem Mikrorechner ablaufenden Programmen kann der Controller 23 genau so gut in Hardware als Peripherieeinheit eines Rechnersystems realisiert werden.

In der Signalaufbereitung 22 werden aus den Eingangssignalen auch abgeleitete Größen berechnet:

Eine Fahrpedal-Verstellgeschwindigkeit $\Delta$dK wird als gleitender Mittelwert (moving average) des Betrags der Änderung des zyklisch abgetasteten Wertes der Verstellgeschwindigkeit berechnet, wobei der jeweils letzte Wert, z.B. mit 80% und der neueste Wert mit 20% gewichtet werden.

Ein Fahrpedal-Mittelwert dK_mittel stellt den Mittelwert über einen vorgegebenen Zeitraum des durch die Drosselklappenstellung gegebenen Fahrerwunsches dK dar und wird zur Berechnung des Fahrstils herangezogen, und zwar in einer Regelbasis RB_Fahrer. Dieser Mittelwert wird folgendermaßen berechnet:

$$dK\_mittel,n = (\Sigma dK,n - dK\_mittel,n-1) / p$$

hierin sind:

$$\Sigma dK,n = dK * K + \Sigma dK,n-1,$$

p die Anzahl der Berechnungszyklen, bis nach einer sprunghaften Änderung von dK ein neuer Mittelwert erreicht ist (z.B. p = 256), und
k ein Normierungsfaktor zur Bewertung des aktuellen dK-Wertes ist. Dabei ist k > 1 und n stellt den n-ten Berechnungszyklus dar.

Die Fahrzeug-Querbeschleunigung ay wird aus den von Drehzahlsensoren gelieferten Radgeschwindigkeiten wie folgt berechnet:

$$ay = \frac{(v_{vr} - v_{vl}) * (v_{vl} - v_{vr})}{2b}$$

wobei

b = die Spurweite an der nicht angetriebenen Achse,
$v_{vl}$ = die Radgeschwindigkeit vorne links und
$v_{vr}$ = die Radgeschwindigkeit vorne rechts (jeweils bei Heck- oder Allradantrieb; bei Frontantrieb werden die hinteren Radgeschwindigkeiten eingesetzt)

sind. Die Radgeschwindigkeiten werden aus den gemessenen Raddrehzahlen berechnet.

Die vorstehende Berechnung der Querbeschleunigung ay ist nur dann korrekt, wenn keine signifikanten Schlupfzustände vorliegen. Da aber im Fall von Schlupfzuständen andere Regeln höher priorisiert sind als der Einfluß der Querbeschleunigung, so wirkt sich der Verlust der Aktualität von ay nicht aus, wenn ay bei Vorhandensein von Schlupf auf einen Ersatzwert gesetzt wird.

Eine andere abgeleitete Größe ist die Differenzkraft $\Delta$F, die sich folgendermaßen berechnen läßt:

$$\Delta F = F_b(t) - F_L(t) - F_R(t) - m_{Fzg} * \frac{d}{dt} n_{ab}(t) - F_{br}(t)$$

hierin sind:

$F_b(t)$ = die Antriebskraft
$F_L(t)$ = der Luftwiderstand
$F_R(t)$ = der Rollwiderstand
$m_{Fzg} * \Delta n_{ab}(t)$ = der Beschleunigungswiderstand und
$F_{br}(t)$ = die Bremskraft

F stellt die Kraftbilanz der auf das Kraftfahrzeug einwirkenden Kräfte am Getriebeabtrieb dar. In der Ebene muß sich ohne äußere Last - z.B. Zuladung oder Anhängerbetrieb - gleich null sein. Ist sie es nicht, so läßt sich daraus eine erhöhte Fahrzeugmasse, eine Fahrbahn-Neigung und/oder eine äußere Last (Zuladung, Anhängerbetrieb usw.) erkennen.

Eine mittlere Differenzkraft ΔF_mittel ist ein Maß für die Fahrbahnsteigung oder -Neigung und/oder die Fahrzeugbeladung, und zwar als Mittelwert in einem Intervall z. Sie stellt den Mittelwert der Differenzkraft ΔF in diesem Zeitintervall z dar. Mit ihr ist es z.B. möglich, eine stark hügelige oder bergige Fahrstrecke und/oder eine erhöhte Fahrzeugbeladung zu erkennen und ein entsprechendes Verhalten des Getriebes mit einer Regelbasis RB_Last auch über eine längere Zeit zu gewährleisten. Damit wird beispielsweise nach einer langen Steigung ein lastadaptives Schaltkennfeld beibehalten, d.h. eine 4 - 5-Hochschaltung wird unterbunden. Damit steht dann der vierte Gang mit besserer Motorbremswirkung bei der nachfolgenden Bergabfahrt zur Verfügung. Somit werden überflüssige 4 - 5- und 5 -4-Schaltungen bei einer hügeligen Landstraße vermieden. Anhand der mittleren Differenzkraft läßt sich auch das Befahren einer Paßstraße mit einer Regelbasis RB_Straße erkennen. Die Berechnung der mittleren Differenzkraft ist wie folgt:

$$\Delta F\_mittel,n = \Sigma\Delta F,n - \Delta F\_mittel,n-1) / p$$

hierin sind:

$$\Sigma\Delta F,n = k*|\Delta F| + \Sigma\Delta F,n-1,$$

k ein Normierungsfaktor zur Bewertung des Betrags der aktuellen Differenzkraft,
n der Berechnungszyklus und
p die Anzahl Berechnungszyklen, bis nach einer sprunghaften Änderung von |Δ| ein neuer Mittelwert erreicht ist (z.B p = 256).

Eine Fahrpedalaktivität ddK_mittel repräsentiert die Häufigkeit der Verstellung des Fahrpedals dK in einem Intervall z und sie wird wie folgt berechnet:

$$ddK\_mittel,n = (\Sigma ddK\_mittel,n - ddK\_mittel,n-1) / p$$

wobei ΣddK_mittel,n = k*|Δdkl + Σddk_mittel, n-1 ist.

Für **k**, **n** und **p** gilt gleiches wie oben. Adk stellt die Fahrpedal-Verstellgeschwindigkeit dar.

Die vorstehenden Berechnungen der mittleren Differenzkraft und der Fahrpedalaktivität entsprechen einer vereinfachten gleitenden Mittelwertbildung.

Kann die Bremskraft von einem ABS-Steuergerät oder einem entsprechenden Sensor geliefert werden, so läßt sich nach vorstehender Gleichung ein aussagefähiger Wert für die Differenzkraft berechnen. Wird die Bremskraft nicht geliefert, so muß dies im Falle einer Bremsung berücksichtigt werden.

Die Raddrehzahlen werden wie erwähnt zum Berechnen der Querbeschleunigung und des Radschlupfes herangezogen. Dabei können bereits kleine Drehzahlunterschiede zu signifikanten Werten der berechneten Größen führen. Es ist deshalb notwendig, Fehlberechnungen durch Änderungen des Umfangs eines oder mehrerer Räder, z.B. durch einen Reifenwechsel oder durch das Anlegen von Schneeketten zu erkennen und zu korrigieren. Andernfalls würden z.B. Hochschaltungen bei erkannter Kurvenfahrt wegen großer Querbeschleunigung fehlerhafterweise gesperrt. Dies kann folgendermaßen vermieden werden: Nach einem Neustart des Getriebe-Steuergeräts 6, d.h. nach einem Einschalten der Zündung, muß die berechnete Querbeschleunigung für eine vorgegebene Zeit unter einem Grenzwert liegen, andernfalls wird sie für den laufenden Betriebszyklus Dauer gleich null gesetzt.

Es wird dabei vorausgesetzt, daß ein Fahrer z.B. für zwei Minuten nach einem Neustart nicht sofort dauerhaft während dieser Zeitspanne mit hoher Querbeschleunigung mit konstantem Vorzeichen fährt. Tritt dagegen der Fall auf, daß die Querbeschleunigung nur kurz den Grenzwert überschreitet und dann wieder auf einen kleinen Wert abfällt, wird sie als plausibel betrachtet und für die Steuerung übernommen.

Die Ausgangssignale "last" und "fahrer" der Fuzzy-Logik 24 und das zu einem Zeitpunkt t aktive Schaltkennfeld SKF(t) bestimmen das Schaltkennfeld zum nachfolgenden Zeitpunkt SKF(t+1). Dabei beträgt die Zykluszeit etwa 20 ms. Die in dem Kennfeldspeicher 24 abgelegten Schaltkennfelder sind aufeinander abgestimmt. Im vorliegenden Ausführungsbeispiel existieren drei fahreradaptive Schaltkennfelder E ("economy"), M ("mittel") und S ("sport") und zwei lastadaptive Schaltkennfelder TA ("teiladaptiv") und A (adaptiv). Bei den fahreradaptiven Schaltkennfeldern erfolgen die Hochschaltungen bei von E über M nach S mit zunehmender Abtriebsdrehzahl $n_{ab}$. Das Schaltkennfeld TA umfaßt nur Schaltungen zwischen den Gängen 3, 4 und 5; die Schaltkennlinien für die Gänge 1 und 2 und von diesen nach 3 entstammen dem fahreradaptiven Schaltkennfeld, das durch das Ausgangssignal "fahrer" festgelegt wird, und zwar mit Ausnahme des Schaltkennfelds S, da dieses die Funktionalität von TA mit einschließt.

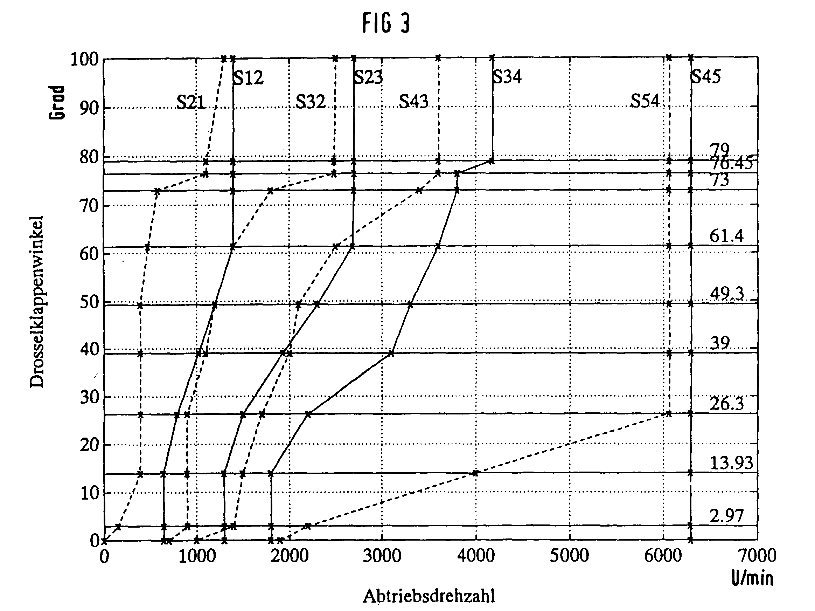

In Figur 3 ist als Beispiel das fahreradaptive Schaltkennfeld S dargestellt. Die Schaltkennlinie S 12 verbindet die Wertepaare Abtriebsdrehzahl und Drosselklappenwinkel, bei denen eine Hochschaltung von dem ersten in den zweiten Gang durchgeführt wird. Entsprechend verbindet z.B. die Schaltkennlinie S 54 die Wertepaare Abtriebsdrehzahl/Drosselklappenwinkel, bei denen eine Rückschaltung von dem fünften in den vierten Gang erfolgt. Gut erkennbar ist die Hysterese der Schaltkennlinien, die bewirkt, daß die Hochschaltung zwischen zwei bestimmten Gängen (z.B. Gang 3 nach Gang 4) bei höheren Drehzahlen erfolgt als die Rückschaltung zwischen denselben Gängen.

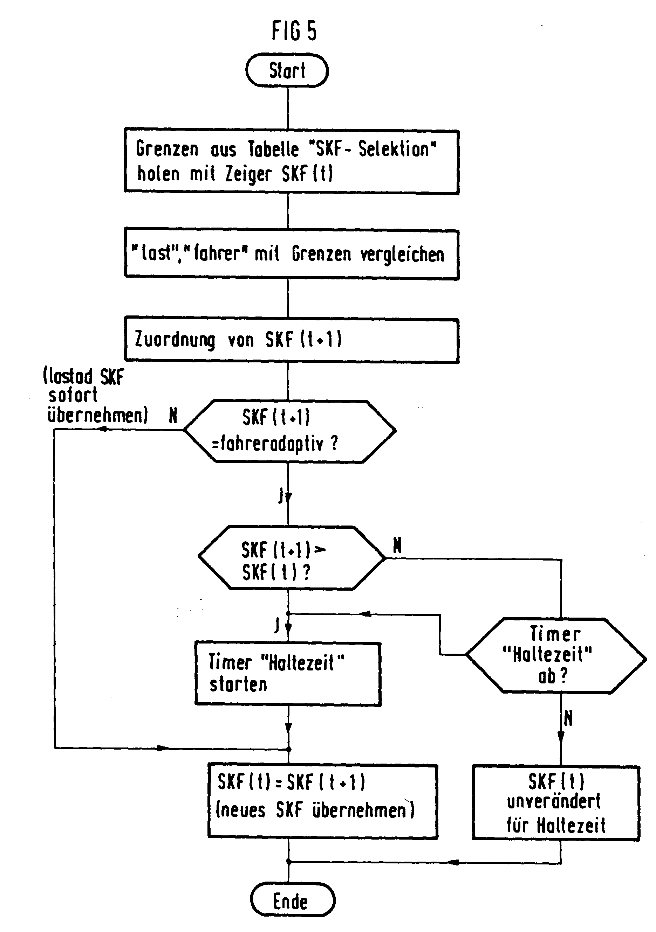

Ist ein fahreradaptives Schaltkennfeld gewechselt worden, so bleibt es eine vorgegebene Haltezeit unverändert aktiv, um häufige Schaltungen durch Schwankungen der genannten Auswahlsignale zu vermeiden. Allerdings setzt sich ein fahrleistungsorientiertes Schaltkennfeld immer sofort gegen ein ökonomischeres Schaltkennfeld durch, um z.B. bei einem Überholvorgang dem Fahrer sofort die erforderliche Beschleunigung durch geeignetes Schaltverhalten des Getriebes zur Verfügung zu stellen (siehe auch Fig. 5). Die Dauer der Haltezeit kann gangabhängig gemacht werden, um z.B. bei Autobahnfahrten ein einheitliches Schaltverhalten länger zu gewährleisten (z.B. mit längeren Haltezeiten in den Gängen vier und fünf). Auch kann die Dauer der Haltezeit von dem Verhalten des Fahrers abhängig gemacht werden, um z.B. bei sehr hoher Leistungsanforderung, d.h. bei großem Signal "fahrer" längere Haltezeiten bei einer Aktivierung des S-Schaltkennfeldes zu bewirken. Derartige Funktionalitäten sind aber abhängig von dem Motor, der Karosserie und des Getriebes des jeweiligen Kraftfahrzeugtyps.

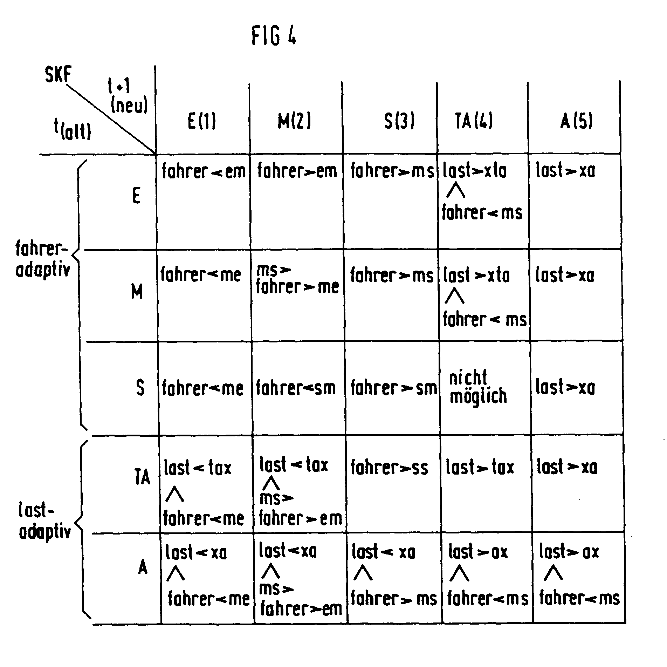

Die aus Figur 4 ersichtliche Matrix enthält die Bedingungen, die die Ausgangssignale "fahrer" und "last" der Fuzzy-Logik 23 erfüllen müssen, um von einem "alten", d.h. zu einem Zeitpunkt t benutzten, Schaltkennfeld (linke Spalte) zu einem "neuen", in einem Zeitpunkt t+1 überzugehen. Die Größen em, ms, xta, xa, me, sm, tax und ax sind vorgebbare Grenzwerte für die beiden Signale. Das Zeichen $\Lambda$ stellt eine UND-Verknüpfung dar.

Um z.B. von einem fahreradaptiven E-Schaltkennfeld zu einem lastadaptiven TA-Schaltkennfeld zu wechseln, muß das Signal "last" größer als ein Grenzwert xta und das Signal "fahrer" kleiner einem Grenzwert ms sein. Ein Wechsel von dem S-Schaltkennfeld zu dem TA-Schaltkennfeld wird nicht zugelassen, da das sportliche S-Schaltkennfeld auch die Bedingungen für das Befahren von Straßen mit mäßigen Steigungen, für die das teiladaptive Schaltkennfeld vorgesehen ist, erfüllt.

Es können einerseits mehr als fünf Schaltkennfelder mit jeweils feinerer Abstufung verwendet werden, die Ausgangssignale der Fuzzy-Logik 23 können aber auch dazu eingesetzt werden, eines oder einige wenige Grundkennfelder zu verändern. Dazu werden mit dem Signal "fahrer" die Kennlinien verschoben und gegebenenfalls mit dem Signal "last" die Hysterese zwischen den Hoch- und den Rückschaltkennlinien verändert. Damit läßt sich die Anzahl erforderlicher Grundkennfelder und der Aufwand, einzelne Kennfelder zu selektieren, verringern.

Die Grenzwerte in der Matrix von Figur 4 werden in Fahrversuchen ermittelt. Sie müssen eine vorgegebene Hysterese zwischen dem Aktivieren und dem Verlassen eines Schaltkennfeldes aufweisen; so ist z.B. der Grenzwert em für den Wechsel von dem E- zu dem M-Schaltkennfeld größer als der Grenzwert me für die Rückkehr von dem M- zu dem E-Schaltkennfeld: em > me.

Außerdem können bei bestimmten Fahrmanövern, z.B. bei der Bergfahrt, die Aktivierungsgrenzwerte verändert werden, z.B. die für das S-Schaltkennfeld erhöht werden, weil das Signal "fahrer" bei der Bergfahrt schwächer bewertet werden muß.

Hier wird ein allgemeiner Vorteil der Fuzzy-Logik offenbar, nämlich, daß eine variable Bewertung der Eingangsgrößen vorgenommen wird, die unterschiedliche Schlußfolgerungen zuläßt. Hat zum Beispiel das Signal "fahrer" einen sehr großen Wert, so handelt es sich um eine kurzfristige Leistungsanforderung des Fahrers, z. B. beim Überholen. Diese quantitative Bewertung wird durch die Fuzzy-Logik vorgenommen und kann als solche besonders genutzt werden.

Die Matrix nach Figur 4 kann technisch durch einen Rechner mit entsprechendem Programm realisiert werden, das entsprechende Abfragen und Verzweigungen abarbeitet oder eine Tabelle aufweist, die abhängig von dem aktuellen Schaltkennfeld SKF (t) adressiert wird. Der Rechner entnimmt dann die Aktivierungs-Grenzwerte und die Art des Vergleichs (">" oder "<" ) aus der Tabelle und legt das zu aktivierende neue Schaltkennfeld durch Vergleich der Signale "fahrer" und "last" mit den Grenzwerten aus der Tabelle fest. Aus Figur 5 ist das gesamte Ablaufdiagramm der dabei ausgeführten Operationen ersichtlich. Das Diagramm ist selbsterklärend.

Die erfindungsgemäße Getriebe-Steuerung 6 führt eine dynamische Schaltpunktkorrektur - mit Schaltungsunterdrückung durch Wechsel des Schaltkennfeldes - wie folgt durch. Anhand des aktiven Schaltkennfelds SKF(t) wird aus den Signalen dK und $n_{ab}$ der neue Gang als Vorschlag ermittelt. Weicht dieser Vorschlag von dem aktuellen, hydraulisch eingelegten Gang ab, so wird daraufhin eine Schaltungsanforderung für eine Hoch- (HS) oder eine Rückschaltung (RS) erzeugt. Diese Schaltung wird jedoch nicht sofort als Schaltbefehl an das Getriebe weitergegeben, sondern ggf. um einige Zeit, dem sog. Verbotszeitraum unterdrückt. Dieser Verbotszeitraum kann solange dauern, daß der Schaltungsvorschlag wieder erlischt. Dies ist z.B. zweckmäßig, wenn bei einer Kurvenfahrt durch Aktionen des Fahrers am Fahrpedal (Signal dK) Schaltungsanforderungen erzeugt werden, deren Ausführung aber stören würde. Ein solches Fahrmanöver wird durch die Fuzzy-Logik erkannt. Außerdem zeigen die von ihr mit dem Signal "schaltung" beim Hoch- oder Runterschalten erzeugten Schaltverbote an, wenn Schlupfzustände zwischen den Rädern und der Fahrbahn existieren. Dies verbessert die Fahrsicherheit im Grenzbereich der Fahrstabilität.

Es hat sich gezeigt, daß noch andere Schaltverbote notwendig sind, die von der Fuzzy-Logik nicht erkannt werden. So können Schaltungen, die durch den Wechsel des fahreradaptiven Schaltkennfeldes entstehen, als störend empfunden werden, weil sie nicht im Zusammenhang mit einer für den Fahrer erkennbaren Aktion oder Umweltbedingung stehen (sogenanntes unmotiviertes Schalten). In diesen Fällen erfolgt eine "Schaltungsunterdrückung durch Wechsel des Schaltkennfeldes", durch die solche Schaltungen solange unterdrückt werden, bis sie in Verbindung mit einem Fahrmanöver ausgeführt werden können, bei dem sie dem Fahrer plausibel erscheinen. Hiervon abweichend werden aber z.B. Rückschaltungen durch Wechsel auf ein lastadaptives Schaltkennfeld beim Anfahren an einem Berg oder Hochschaltungen durch Verlassen eines lastadaptiven Schaltkennfeldes erlaubt. Fahrmanöver, die eine Hochschaltung plausibel machen, sind z.B. eine Fahrzeugbeschleunigung (durch das Signal $\Delta n_{ab}$ eingeleitet) oder eine hohe Motordrehzahl (durch $n_{mot}$).

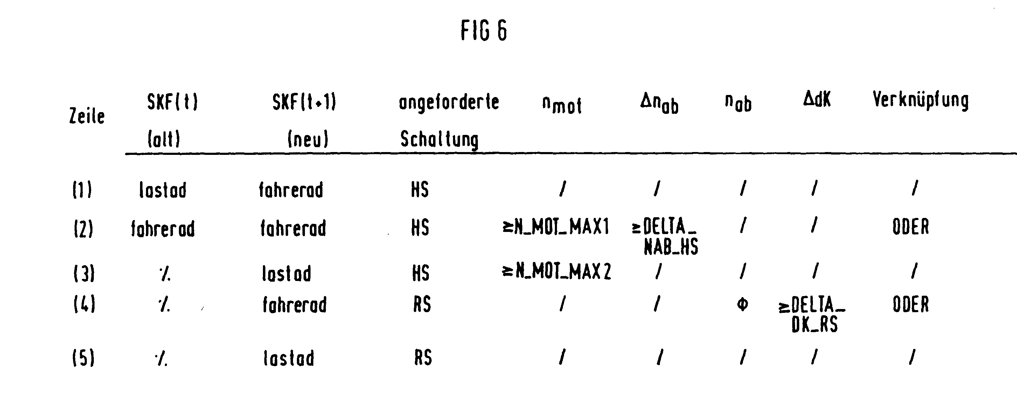

Eine weitere Vereinfachung und Verbesserung der vorstehend beschriebenen Funktionen wird dadurch erreicht, daß ein neuer Gang weiter mit dem bisherigen Schaltkennfeld SKF(t) berechnet und mit einem neuen Gang verglichen wird, der mit dem neuen Schaltkennfeld SKF(t+1) berechnet wird. Ergeben die beiden Schaltkennfelder den gleichen neuen Gang, so wird dieser und die damit verbundene Schaltung zugelassen. Es gibt aber Fälle, in denen dies nicht möglich ist. So wird z.B. in dem S-Schaltkennfeld der erste Gang benutzt, nicht aber in den E- und M-Schaltkennfeldern. Umgekehrt verhält es sich mit dem fünften Gang, der im S-Schaltkennfeld nicht verwendet wird (in diesem sorgt eine Overdrive-Charakteristik für eine Geräuschabsenkung und eine Minderung des Kraftstoffverbrauchs). Solche Schaltungen müssen, wenn sie nicht von der Fahrbahn (z.B. Anfahrt am Berg), dem Fahrzeug (Beschleunigung, Motordrehzahl) oder dem Fahrer (Niedertreten des Fahrpedals) gefordert, werden unterbunden werden. Treten andererseits die vorstehend genannten Bedingungen auf, so sind zugehörige Schaltungen für den Fahrer plausibel. Diese Fälle des Zulassens von "Schaltungen durch Wechsel des Schaltkennfeldes ausgelöst" sind in der Tabelle von Figur 6 zusammengefaßt.

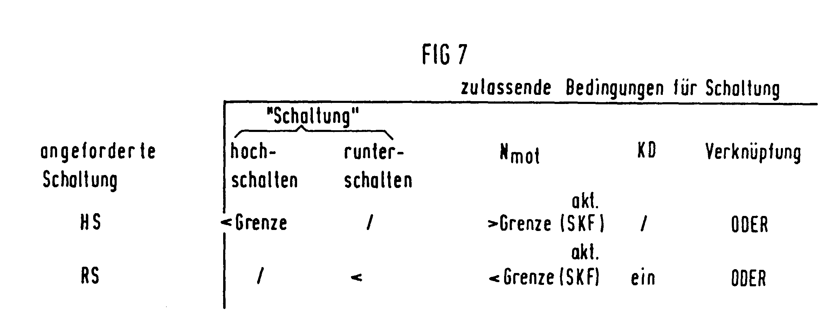

Die Tabelle der Figur 7 zeigt "scharfe" Motordrehzahlbedingungen, die Fuzzy-Schaltverbote aufheben. Sie sind notwendig, weil nicht alle Regeln in der Fuzzy-Logik, die Schaltungen unterdrücken, die Motordrehzahl berücksichtigen.

Nach dem Erlöschen eines Fuzzy-Hochschaltverbots wird zusätzlich die (von dem Schaltkennfeld angeforderte) Hochschaltung noch eine Zeit gesperrt. Diese hängt von dem Fahrstil ab, sie wird z.B. in Form einer Kennlinie festgelegt. Damit wird bewirkt, daß bei leistungsorientierter Fahrweise (Oberholen, kurvenreiche Strecke) erst hochgeschaltet wird, nachdem das Fahrpedal länger nicht betätigt worden ist, oder wenn das Fahrzeug auf einem geraden Streckenabschnitt fährt.

**Patentansprüche**

1. Steuerung (6) für ein automatisches Kraftfahrzeuggetriebe (5), durch welche die Übersetzung des Getriebes in Abhängigkeit von der Fahrpedalstellung und von der Fahrzeuggeschwindigkeit anhand von abgespeicherten Kennfeldern (SKF1,..., SKFn) automatisch eingestellt wird, durch welche außerdem der Lastzustand des Kraftfahrzeugs berücksichtigt werden, die eine mit einer Regelbasis (29) versehene Fuzzy-Logik (23) aufweist, durch die zeitliche Mittelwerte oder Änderungen von Signalen (dk, ay, ddk), die Betriebszustände des Kraftfahrzeugs oder Fahrpedalbetätigungen wiedergeben, ausgewertet und zur Auswahl oder Veränderung des zum Steuern der Übersetzung des Getriebes einzusetzenden Kennfeldes verwendet werden, **dadurch gekennzeichnet,** daß durch die Fuzzy-Regelbasis (29) den Fahrstil des Fahrers und den Lastzustand des Kraftfahrzeugs charakterisierende Auswahlsignale (f, l) gebildet werden, mit denen das Kennfeld (SKF) in Abhängigkeit von dem jeweils vorherigen Kennfeld festgelegt oder verändert wird.

2. Steuerung nach Anspruch 1 dadurch gekennzeichnet, daß sie eine Signalaufbereitungsschaltung (22) aufweist, durch die die Differenz von jeweils zwei Signalen (ay), die in aufeinanderfolgenden Zeitintervallen die Querbeschleunigung des Kraftfahrzeuges wiedergeben, gebildet und zur Erkennung des Beginns einer Kurvenfahrt verwendet wird.

3. Steuerung nach Anspruch 1, dadurch gekennzeichnet, daß sie eine Signalaufbereitungsschaltung (22) aufweist, durch die die Häufigkeit der Verstellung des Fahrpedals (ddk) während eines vorgegebenen Zeitintervalls (z) ermittelt und zur Bewertung des Fahrstils des Fahrers verwendet wird.

4. Steuerung nach Anspruch 1, dadurch gekennzeichnet, daß sie eine Signalaufbereitungsschaltung (22) aufweist, durch die der Betrag der Differenz ($\Delta F$) aus der Antriebs- und Bremskraft sowie den Fahrwiderständen des Kraftfahrzeugs in der Ebene gebildet und über eine vorgegebene Zeitspanne gemittelt wird, und daß aus dem erhaltenen Mittelwert der Fahrbahntyp und die Beladung des Kraftfahrzeugs ermittelt werden.

5. Steuerung nach Anspruch 1, dadurch gekennzeichnet, daß sie eine Kennfeld-Auswahlschaltung aufweist, in der vorgegebene Grenzwerte (em, me, ms, sm, ax, xa, xta) für die Auswahlsignale (f, l) abgelegt sind, und daß diese Grenzwerte für das Auswählen oder Verändern von Kennfeldern maßgeblich sind.

6. Steuerung nach Anspruch 5, dadurch gekennzeichnet, daß die Grenzwerte (em, me, ms, sm, ax, xa, xta) empirisch festgelegt oder berechnet und mit einer Hysterese versehen werden.

7. Steuerung nach Anspruch 1, dadurch gekennzeichnet, daß das Kennfeld durch ein punktweises Verschieben von Übersetzungswertzuweisungen verändert wird.

**8.** Steuerung nach Anspruch 6, dadurch gekennzeichnet, daß die Hysterese durch Erhöhen des Abstands zwischen den jeweiligen Hochschalt- und den Rückschaltkennlinien (1-2, 2-1,..,3-4, 4-3) vergrößert wird.

**Claims**

**1.** Controller (6) for an automatic motor vehicle transmission (5), by means of which the transmission ratio of the transmission is automatically set as a function of the accelerator pedal position and of the vehicle speed with the aid of stored characteristic maps (SKF1,..., SKFn), by means of which, furthermore, the load condition of the motor vehicle are taken into account, and which controller has a fuzzy logic unit (23) which is provided with a rule base (29) by means of which temporal mean values or signal changes (dk, ay, ddk), which reproduce operating conditions of the motor vehicle or accelerator pedal actuations, are evaluated and are used to select or vary the characteristic map which is to be used to control the transmission ratio of the transmission, characterized in that by means of the fuzzy rule base (29) selection signals (f, 1) are formed which typify the driving style of the driver and the load condition of the motor vehicle and by means of which the characteristic map (SKF) is fixed or varied as a function of the respective preceding characteristic map.

**2.** Controller according to Claim 1, characterized in that it has a signal conditioning circuit (22) by means of which the difference between in each case two signals (ay), which reproduce the transverse acceleration of the motor vehicle at successive time intervals, is formed and used to detect the start of cornering.

**3.** Controller according to Claim 1, characterized in that it has a signal conditioning circuit (22) by means of which the frequency of the adjustment of the accelerator pedal (ddk) during a prescribed time interval (z) is determined and used to evaluate the driving style of the driver.

**4.** Controller according to Claim 1, characterized in that it has a signal conditioning circuit (22) by means of which the absolute value of the difference ($\Delta F$) between the driving and braking forces and the tractive resistances of the motor vehicle in the plane is formed and is averaged over a prescribed period, and in that the type of roadway and the loading of the motor vehicle are determined from the mean value obtained.

**5.** Controller according to Claim 1, characterized in that it has a characteristic map selection circuit in which prescribed limiting values (em, me, ms, sm, ax, xa, xta) for the selection signals (f, 1) are stored, and in that these limiting values are decisive for selecting or varying characteristic maps.

**6.** Controller according to Claim 5, characterized in that the limiting values (em, me, ms, sm, ax, xa, xta) are fixed empirically or calculated and provided with a hysteresis.

**7.** Controller according to Claim 1, characterized in that the characteristic map is varied by point-by-point displacement of transmission ratio value assignments.

**8.** Controller according to Claim 6, characterized in that the hysteresis is enlarged by increasing the distance between the respective change-up and change-down characteristics (1-2, 2-1,...,3-4, 4-3).

**Revendications**

**1.** Commande (6) pour une boîte de vitesses automatique (5) de véhicule automobile, au moyen de laquelle le rapport de transmission de la boîte de vitesses est réglé automatiquement en fonction de la position de la pédale d'accélération et de la vitesse du véhicule automobile, à l'aide de champs de caractéristiques conservés en mémoire (SKF1, ..., SKFn), au moyen de laquelle, de plus, est pris en compte l'état de charge du véhicule automobile, qui comporte une logique floue (23), munie d'une base de règles (29), par laquelle les valeurs moyennes dans le temps ou les modifications de signaux (dk, ay, ddk), les états de fonctionnement du véhicule automobile ou les actionnements de la pédale d'accélérateur sont restitués, traités et utilisés pour choisir ou modifier le champ de caractéristiques à mettre en oeuvre pour commander le rapport de transmission de la boîte de vitesses,

caractérisée en ce que, par la base de règles (29) de la logique floue, sont formés des signaux de sélection (f, l) caractérisant le style de conduite du conducteur et l'état de charge du véhicule automobile, avec lesquels le champ de caractéristiques (SKF) est déterminé, ou est modifié, en fonction de chaque champ de caractéristiques précédent.

**2.** Commande suivant la revendication 1, caractérisée en ce qu'elle comporte un circuit de traitement de signaux (22), par lequel est formée la différence de deux signaux respectifs (ay) rendant compte, à des intervalles de temps successifs, de l'accélération transversale du véhicule automobile, et qui est utilisée pour reconnaître le début d'une circulation en courbe.

3. Commande suivant la revendication 1, caractérisée en ce qu'elle comporte un circuit de traitement de signaux (22), par lequel la fréquence du réglage en position de la pédale d'accélérateur (ddk) pendant un intervalle de temps prédéfini (z) est déterminée et est utilisée pour évaluer le style de conduite du conducteur.

4. Commande suivant la revendication 1, caractérisée en ce qu'elle comporte un circuit de traitement de signaux (22), par lequel est formée la valeur de la différence ($\Delta F$) entre la force d'entraînement et la force de freinage ainsi que les résistances à l'avancement du véhicule automobile en plaine, et sa valeur moyenne est calculée sur une période de temps prédéterminée, et en ce que le type de voie de circulation et le chargement du véhicule automobile sont déterminés à partir de la valeur moyenne obtenue.

5. Commande suivant la revendication 1, caractérisée en ce qu'elle comporte un circuit de sélection de champ de caractéristiques, dans lequel sont enregistrées des valeurs limite (em, me, ms, sm, ax, xa, xta) prédéfinies pour les signaux de sélection (f, 1), et en ce que ces valeurs limite sont déterminantes pour la sélection ou la modification de champs de caractéristiques.

6. Commande suivant la revendication 5, caractérisée en ce que les valeurs limite (em, me, ms, sm, ax, xa, xta) sont déterminées de façon empirique, ou bien sont calculées, et qu'elles sont affectées d'une certain hystérésis.

7. Commande suivant la revendication 1, caractérisée en ce que le champ de caractéristiques est modifié par un glissement ponctuel des distributions des valeurs de rapports de transmission.

8. Commande suivant la revendication 6, caractérisée en ce que l'hystérésis croît par augmentation de la distance entre chacune des lignes de changement de rapport de vitesse vers le haut et de rétrogradation (1-2, 2-1, ..., 3-4, 4-3).

## FIG 1

FIG 2

EP 0 622 570 B1

FIG 3

## FIG 4

| SKF    t+1 (neu)     t(alt) | E(1) | M(2) | S(3) | TA(4) | A(5) |
|---|---|---|---|---|---|
| **fahrer-adaptiv**   E | fahrer < em | fahrer > em | fahrer > ms | last > xta ∧ fahrer < ms | last > xa |
| **fahrer-adaptiv**   M | fahrer < me | ms > fahrer > me | fahrer > ms | last > xta ∧ fahrer < ms | last > xa |
| **fahrer-adaptiv**   S | fahrer < me | fahrer < sm | fahrer > sm | nicht möglich | last > xa |
| **last-adaptiv**   TA | last < tax ∧ fahrer < me | last < tax ∧ ms > fahrer > em | fahrer > ss | last > tax | last > xa |
| **last-adaptiv**   A | last < xa ∧ fahrer < me | last < xa ∧ ms > fahrer > em | last < xa ∧ fahrer > ms | last > ox ∧ fahrer < ms | last > ox ∧ fahrer < ms |

# FIG 5

Start

Grenzen aus Tabelle "SKF- Selektion" holen mit Zeiger SKF (t)

"last","fahrer" mit Grenzen vergleichen

Zuordnung von SKF (t+1)

(lastad SKF sofort übernehmen)

N

SKF (t+1) =fahreradaptiv ?

J

SKF (t+1) > SKF (t) ?

N

Timer "Haltezeit" ab ?

J

Timer "Haltezeit" starten

N

SKF(t)=SKF(t+1) (neues SKF übernehmen)

SKF(t) unverändert für Haltezeit

Ende

## FIG 6

| Zeile | SKF(t) (alt) | SKF(t+1) (neu) | angeforderte Schaltung | $n_{mot}$ | $\Delta n_{ab}$ | $n_{ab}$ | $\Delta dK$ | Verknüpfung |
|---|---|---|---|---|---|---|---|---|
| (1) | lastad | fahrerad | HS | / | / | / | / | / |
| (2) | fahrerad | fahrerad | HS | $\geq$N_MOT_MAX1 | $\geq$DELTA_NAB_HS | / | / | ODER |
| (3) | ./. | lastad | HS | $\geq$N_MOT_MAX2 | / | / | / | / |
| (4) | ./. | fahrerad | RS | / | / | Φ | $\geq$DELTA_DK_RS | ODER |
| (5) | ./. | lastad | RS | / | / | / | / | / |

EP 0 622 570 B1

# FIG 7

zulassende Bedingungen für Schaltung

| angeforderte Schaltung | "Schaltung" | | $N_{mot}$ | KD | Verknüpfung |
|---|---|---|---|---|---|
| | hoch-schalten | runter-schalten | | | |
| HS | <Grenze | / | akt. >Grenze (SKF) | / | ODER |
| RS | / | < | akt. <Grenze (SKF) | ein | ODER |

EP 0 622 570 B1